# EUROPEAN PATENT APPLICATION

(11) **EP 4 371 973 A1**
(43) Date of publication of application: **22.05.2024**
(21) Application number: 22861393.1
(22) Date of filing: 24.08.2022
(51) Int. Cl.: C07C 211/09, C07C 211/11, C07C 215/08, B01D 53/14, B01D 53/52, B01D 53/62, B01D 53/78, B01D 53/96, C01B 32/50, C01B 17/16

(54) **COMPOSITE AMINE ABSORBING LIQUID, REMOVAL APPARATUS, AND REMOVAL METHOD**

(30) Priority: 26.08.2021 JP 2021138177
(71) Applicant: Mitsubishi Heavy Industries, Ltd., Tokyo 100-8332 (JP); THE KANSAI ELECTRIC POWER CO., INC., Kita-ku Osaka-shi, Osaka 530-8270 (JP)
(72) Inventor: TANAKA, Hiroshi, Tokyo 100-8332 (JP); HIRATA, Takuya, Tokyo 100-8332 (JP); TSUJIUCHI, Tatsuya, Tokyo 100-8332 (JP); SUGIURA, Takuya, Tokyo 100-8332 (JP); KAMIJO, Takashi, Yokohama-shi, Kanagawa 220-8401 (JP); NOBORISATO, Tomoki, Yokohama-shi, Kanagawa 220-8401 (JP)
(74) Representative: Studio Torta S.p.A.
(86) International application number: PCT/JP2022/031879
(87) International publication number: WO 2023/027105

(57) **Abstract**

Provided is a composite amine absorbent having an enhanced reaction rate. The composite amine absorbent absorbs at least one of CO₂ and H₂S in a gas, in which this liquid includes (a) a chain monoamine, (b) a diamine containing amino groups having the same number of substituents, (c) a chain diamine containing amino groups having different numbers of substituents, and (d) water.

## Description

### Field

The present disclosure relates to a composite amine absorbent, a removal unit, and a removal method. Background

In recent years, the greenhouse effect caused by CO₂ has been pointed out as one of the causes of the global warming phenomenon, and countermeasures thereagainst have become an urgent international necessity in order to protect the global environment. Emission of CO₂ comes from all areas of human activities that burn fossil fuels, and the demand for emission control tends to grow further. In accordance with this trend, methods for removing and recovering CO₂ from the flue gas of boilers by bringing the flue gas into contact with an amine-based CO₂-absorbent and for storing the recovered CO₂ without releasing it into the atmosphere are being intensively investigated for power generation facilities such as a thermal power plant that use large amounts of fossil fuels. At the process of removing and recovering CO₂ from the flue gas using such a CO₂-absorbent, the flue gas and the CO₂-absorbent are brought into contact in an absorber, and the CO₂-absorbed absorbent is heated in a regenerator to release CO₂ and regenerate the absorbent, which is then circulated back into the absorber so as to be reused.

As for the CO₂-absorbent, for example, the absorbent containing propanediamine compounds has been proposed (see Patent Literatures 1 to 4).

### Citation List

### Patent Literature

Patent Literature 1: Japanese Patent Application Laid-open No. 2005-296897
Patent Literature 2: National Publication of International Patent Application No. 2007-527791
Patent Literature 3: Japanese Patent No. 4634384
Patent Literature 4: Japanese Patent Application Laid-open No. 2018-122278

### Summary

### Technical Problem

By using the absorbent described in Patent Literatures 1 to 4, at least one of CO₂ and H₂S included in the gas to be treated can be separated from the gas by the absorbent. Here, the faster the reaction rate of the absorbent, the more efficiently the CO₂ and H₂S to be absorbed can be recovered.

In view of the issue described above, an object of the present disclosure is to provide a composite amine absorbent with a faster reaction rate, a removal unit, and a removal method.

### Solution to Problem

In order to solve the above problem, a composite amine absorbent according to the present disclosure absorbs at least one of CO₂ and H₂S in a gas, and includes: (a) a chain monoamine; (b) a diamine containing amino groups having the same number of substituents; (c) a chain diamine containing amino groups having different numbers of substituents; and (d) water.

In order to solve the above problem, a removal unit according to the present disclosure includes: an absorber for removing at least one of CO₂ and H₂S by bringing a gas containing at least one of CO₂ and H₂S into contact with an absorbent; and an absorbent regenerator for regenerating a liquid having at least one of CO₂ and H₂S absorbed, a liquid regenerated by removing at least one of CO₂ and H₂S in the absorbent regenerator being reused in the absorber, wherein the above-described composite amine absorbent is used.

In order to solve the above problem, a removal method according to the present disclosure includes: removing at least one of CO₂ and H₂S by bringing a gas containing at least one of CO₂ and H₂S into contact with an absorbent in an absorber; regenerating a liquid having at least one of CO₂ and H₂S absorbed in an absorbent regenerator; and reusing in the absorber a liquid regenerated by removing at least one of CO₂ and H₂S in the absorbent regenerator, wherein the above-described composite amine absorbent is used.

### Advantageous Effects of Invention

According to the present disclosure, when (a) a linear monoamine, (b) a diamine, and (c) a chain diamine containing amino groups having different numbers of substituents are dissolved in water to make an absorbent, they are interacted in a composite manner, and their synergistic effects result in good absorption of CO₂ or H₂S or both, so that it is possible to reduce the flow amount of the absorbent and to lower the height of the absorber. Brief Description of Drawings
FIG. 1 is a schematic diagram of configuration of CO₂ recovery unit using an absorbent of the present disclosure.
FIG. 2 is a graph illustrating the results of the increase ratios of the reaction rates of Examples in Table 1 relative to first comparative examples.
FIG. 3 is a graph illustrating the results of the increase ratios of the reaction rates of Examples in Table 1 relative to second comparative examples.
FIG. 4 is a graph illustrating the results of the increase ratios of the reaction rates of Examples in Table 2 relative to first comparative examples.
FIG. 5 is a graph illustrating the results of the increase ratios of the reaction rates of Examples in Table 2 relative to second comparative examples.

### Description of Embodiments

Hereinafter, preferable Examples of the present disclosure will be described in detail with referring to the attached drawings. The present disclosure is not restricted by the Examples, and if there are a plurality of Examples, any composition in combination of these Examples shall be included.

The composite amine absorbent according to the present disclosure absorbs at least one of CO₂ and H₂S in gas, and this contains (a) a chain monoamine, (b) a diamine containing amino groups having the same number of substituents, (c) a chain diamine containing amino groups having different numbers of substituents, and (d) water. In other words, this is a liquid in which (a) a chain monoamine, (b) a diamine containing amino groups having the same number of substituents, and (c) a chain diamine containing amino groups having different numbers of substituents are dissolved in water. In the present disclosure, when (a) the chain monoamine, (b) the diamine containing amino groups having the same number of substituents, and (c) the chain diamine containing amino groups having different numbers of substituents are dissolved in water to make the absorbent, these substances are interacted in a composite manner, and their synergistic effects result in good absorption of CO₂ or H₂S or both in the gas containing at least one of CO₂ and H₂S. In other words, it is possible to increase the reaction rate of the absorbent.

Here, (a) the linear monoamine (a component) includes at least one of a primary linear monoamine (a1 component; a primary chain monoalkanolamine), a secondary linear monoamine (a2 component; a secondary chain monoalkanolamine), and a tertiary linear monoamine (a3 component; a tertiary chain monoalkanolamine). It may also be a two-component linear amine combination of a primary linear monoamine and a secondary linear monoamine, a two-component linear amine combination of a primary linear monoamine and a tertiary linear monoamine, or even a three-component linear amine combination of a primary linear monoamine, a secondary linear monoamine, and a tertiary linear monoamine.

As for the primary linear monoamine (a1 component; primary chain monoalkanolamine), preferable is a primary monoamine having a low steric hindrance (alL component) or a primary monoamine having a high steric hindrance (a1H component). Here, in the primary linear monoamine, the primary monoamine having a low steric hindrance (alL component) is, for example, at least one amine selected from monoethanolamine (MEA), 3-amino-1-propanol, 4-amino-1-butanol, and diglycolamine. A combination of these compounds may also be used.

In addition, in the primary linear monoamine, the primary monoamine having a high steric hindrance (a1H component) is a compound represented by the chemical formula "Chem. 1" below. 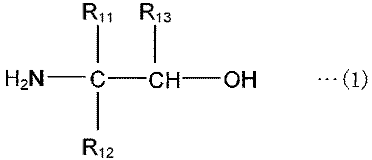 **R₁₁ TO R₁₃: H OR HYDROCARBON GROUP HAVING 1 TO 3 CARBON ATOMS**

Specifically, the primary monoamine having a high steric hindrance (a1H component) may be, for example, at least one compound selected from 2-amino-1-propanol (2A1P), 2-amino-1-butanol (2A1B), 2-amino-3-methyl-1-butanol (AMB), 1-amino-2-propanol (1A2P), 1-amino-2-butanol (1A2B), and 2-amino-2-methyl-1-propanol (AMP); but the present disclosure is not limited to these compounds. A combination of these compounds may also be used.

The secondary linear monoamine (a2) is preferably a compound represented by the chemical formula "Chem. 2" below. 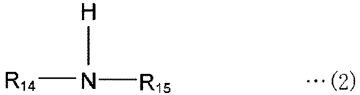
**R₁₄: LINEAR HYDROCARBON GROUP HAVING 1 TO 4 CARBON ATOMS**
**R₁₅: HYDROXYALKYL GROUP HAVING 1 TO 4 CARBON ATOMS**

Specifically, the secondary linear monoamine (2a; secondary chain monoalkanolamine) may be, for example, at least one compound selected from N-methylaminoethanol, N-ethylaminoethanol, N-propylaminoethanol, and N-butylaminoethanol; but the present disclosure is not limited to these compounds. A combination of these compounds may also be used.

The tertiary linear monoamine (a3) is preferably a compound represented by the chemical formula "Chem. 3" below. 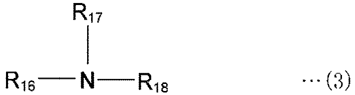
**R₁₆: HYDROCARBON GROUP HAVING 1 TO 4 CARBON ATOMS**
**R₁₇: HYDROCARBON GROUP AND HYDROXYALKYL GROUP**
**HAVING 1 TO 4 CARBON ATOMS**
**R₁₈: HYDROCARBON GROUP AND HYDROXYALKYL GROUP**
**HAVING 1 TO 4 CARBON ATOMS**

Specifically, the tertiary linear monoamine (a3, tertiary chain monoalkanolamine) may be, for example, at least one compound selected from N-methyldiethanolamine, N-ethyldiethanolamine, N-butyldiethanolamine, 4-dimethylamino-1-butanol, 2-dimethylaminoethanol, 2-diethylaminoethanol, 2-di-n-butylaminoethanol, N-ethyl-N-methylethanolamine, 3-dimethylamino-1-propanol, and 2-dimethylamino-2-methyl-1-propanol; but the present disclosure is not limited these compounds. A combination of these compounds may also be used.

It is preferable that (b) the diamine containing amino groups having the same number of substituents (b component) contain at least one of a primary linear polyamine, a secondary linear polyamine, and a secondary cyclic polyamine.

The primary linear polyamine group may be, for example, at least one compound selected from ethylenediamine (EDA) and propanediamine (PDA); but the present disclosure is not limited to these compounds. The group of the secondary linear polyamine may be, for example, at least one compound selected from N,N'-dimethylethylenediamine (DMEDA), N,N'-diethylethylenediamine (DEEDA), and N,N'-dimethylpropanediamine (DMPDA), but the present disclosure is not limited to these compounds. A combination of these compounds may also be used.

The secondary cyclic polyamines may be, for example, at least one compound selected from piperazine (PZ), 2-methylpiperazine (2MPZ), and 2,5-dimethylpiperazine (DMPZ); but the present disclosure is not limited to these compounds. A combination of these compounds may also be used.

(c) The chain diamine containing amino groups having different numbers of substituents contains two classes of amino groups out of the primary amino group, the secondary amino group, and the tertiary amino group. It is preferable that (c) the chain diamine containing amino groups having different numbers of substituents contain at least one chain diamine containing a tertiary amino group. Furthermore, it is more preferable that (c) the chain diamine containing amino groups having different numbers of substituents contain at least one chain diamine containing a tertiary amino group and a primary amino group.

Illustrative examples of the chain diamine containing a tertiary amino group and a primary amino group include at least one compound selected from N,N-diethylpropanediamine and N,N-dibutylpropanediamine.

It is more preferable that (c) the chain diamines containing amino groups having different numbers of substituents contain at least one chain diamine containing a tertiary amino group and a secondary amino group. Illustrative examples of the chain diamine containing the tertiary amino group and the secondary amino group include N,N,N'-trimethylpropanediamine, N,N,N'-triethylpropanediamine, N'-ethyl-N,N-dimethylpropanediamine, and N,N-diethyl-N'-methylpropanediamine.

Next, the preferable blending ratio of the components (a, b, and c components) is specified as follows. The total concentration of (a) the linear monoamine (a component) and (b) the diamine containing amino groups having the same number of substituents (b component) is preferably 20% by weight or more and 65% by weight or less of the total absorbent, and even more preferably 30% by weight or more and 60% by weight or less of the total absorbent. This range allows the absorbent to function well. (a) The linear monoamine (a component) is preferably 15% by weight or more and 60% by weight or less of the total absorbent, and even more preferably 20% by weight or more and 55% by weight or less of the total absorbent. (b) The diamine containing amino groups having the same number of substituents (b component) is preferably 1% by weight or more and 15% by weight or less of the total absorbent, and even more preferably 2% by weight or more and 10% by weight or less of the total absorbent. (c) The chain diamine containing amino groups having different numbers of substituents is preferably more than 5% by weight and 35% by weight or less of the total absorbent, and even more preferably more than 9% by weight and 25% by weight or less of the total absorbent.

For the blending ratio of (b) the diamine containing amino groups having the same number of substituents (b component) and (c) the chain diamine containing amino groups having different numbers of substituents (c component) to (a) the linear monoamine (a component), the weight ratio of ((b) the diamine containing amino groups having the same number of substituents + (c) the chain diamine containing amino groups having different numbers of substituents) / ((a) the chain monoamine) is preferably 0.16 or more and 3.5 or less, i.e., 0.16 ≤ (b + c)/a ≤ 3.5, and this ratio is more preferably 0.23 ≤ (b + c)/a ≤ 1.5.

As for the blending ratio of (b) the diamine containing amino groups having the same number of substituents to (c) the chain diamine containing amino groups having different numbers of substituents, the weight ratio of (b) the diamine containing amino groups having the same number of substituents to (c) the chain diamine containing amino groups having different numbers of substituents is preferably 1 or more and 16.5 or less, i.e., 1 ≤ b/c ≤ 16.5, and this ratio is more preferably 3 ≤ b/c ≤ 12.5.

For the blending ratio (% by weight) of water (component d), the weight ratio of water is the remainder of the total weight of (a) the linear monoamine, (b) the diamine containing amino groups having the same number of substituents, and (c) the chain diamine containing amino groups having different numbers of substituents.

In the present disclosure, for example, the absorption temperature at the absorber with a chemical absorption method when in contact with the flue gas containing CO₂ is preferably in the range of 30 to 80°C. To the absorbent used in this disclosure, a corrosion inhibitor, an anti-deterioration agent, and the like may be added as needed.

From a viewpoint of the chemical absorption method, the partial pressure of CO₂ at the CO₂ inlet of the absorber during absorption of CO₂ in the gas to be treated is preferably a low CO₂ partial pressure (e.g., 0.003 to 0.1 MPa).

In the present disclosure, the regeneration temperature at the regenerator that releases CO₂ and so forth from the absorbent that has absorbed CO₂ and so forth is preferably 110°C or higher at the bottom of the absorbent regenerator when the pressure in the regenerator is in the range of 130 to 200 kPa (absolute pressure). This is because the regeneration at the temperature below 110°C requires a larger circulation volume of the absorbent in the system; so such temperature is not preferable from a viewpoint of a regeneration efficiency. The regeneration temperature is more preferably 115°C or higher.

Illustrative examples of gases that can be treated by the present disclosure include a coal gasification gases, synthesis gases, coke oven gases, petroleum gases, natural gases, and flue gases, but not limited to these gases. Any gases may be used as far as they contain acidic gases such as CO₂ and H₂S.

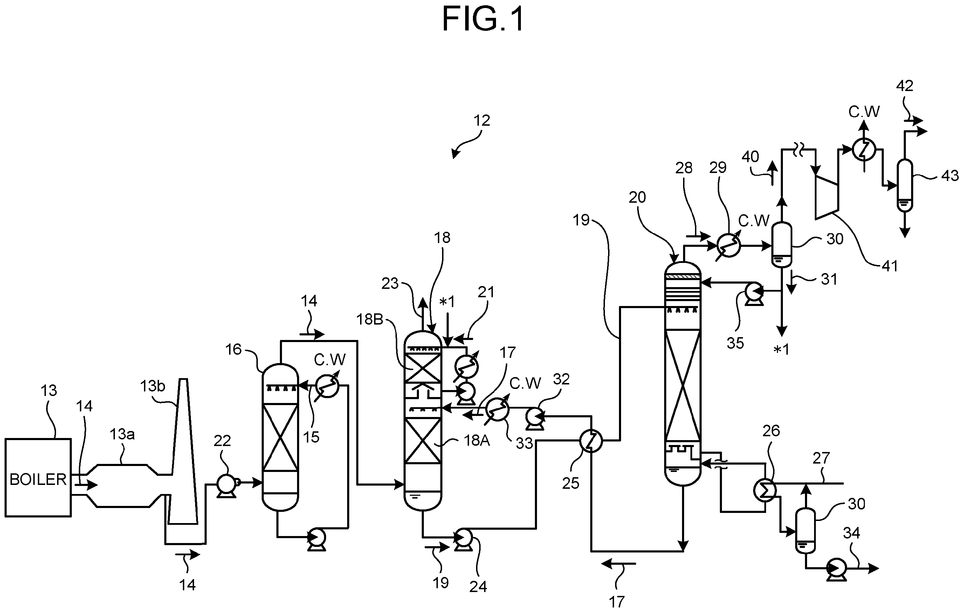

There is no particular restriction in the process that may be employed in the method of removing CO₂ or H₂S or both of them from the gases of the present disclosure. Hereinafter, an example of a removal unit that removes CO₂ will be described with referring to FIG. 1.

FIG. 1 is a schematic diagram of the configuration of CO₂ recovery unit relating to Example 1. As can be seen in FIG. 1, CO₂ recovery unit 12 relating to Example 1 has flue gas cooling device 16 that cools a flue gas 14 containing CO₂ and O₂ discharged from an industrial combustion facility 13 such as a boiler and a gas turbine by means of cooling water 15, a CO₂-absorber 18 having a CO₂ recovery section 18A that removes CO₂ from the flue gas 14 by bringing the cooled CO₂-containing flue gas 14 into contact with a CO₂-absorbent 17 that absorbs CO₂ (hereinafter, this is also referred to as "absorbent"), and an absorbent regenerator 20 that regenerates the CO₂-absorbent by releasing CO₂ from a CO₂-absorbed CO₂-absorbent 19 (hereinafter this is also referred to as "rich solution"). Then, in this CO₂ recovery unit 12, the regenerated CO₂-absorbent 17 (hereinafter also referred to as "lean solution") having CO₂ removed in the absorbent regenerator 20 is reused as the CO₂-absorbent in the CO₂-absorber 18.

In FIG. 1, a symbol 13a is a flue gas duct, 13b is a stack, and 34 is a steam condensate. The CO₂ recovery unit 12 may be retrofitted to recover CO₂ from an existing flue gas source, or it may be installed simultaneously with a new flue gas source. A damper that can be opened and closed is installed in the line of the flue gas 14 and is opened when the CO₂ recovery unit 12 is in operation. The flue gas source is also set to be closed when the CO₂ recovery unit 12 is shut down while the flue gas source is still in operation.

In this CO₂ recovery method using the CO₂ recovery unit 12, the flue gas 14 containing CO₂ from the industrial combustion facility 13 such as a boiler and a gas turbine is first boosted by a flue gas blower 22, then sent to the flue gas cooling device 16, where it is cooled by the cooling water 15 and sent to the CO₂-absorber 18.

In the CO₂-absorber 18, the flue gas 14 is brought into countercurrent contact with the CO₂-absorbent 17, which is the amine-based absorbent in the Examples, and the CO₂ in the flue gas 14 is absorbed into the CO₂-absorbent 17 with a chemical reaction. After CO₂ is removed in the CO₂ recovery section 18A, the CO₂-removed flue gas is brought into gas-liquid contact with a circulating rinse water 21 containing the CO₂-absorbent supplied from liquid distributor in the rinsing section 18B in the CO₂-absorber 18, and the CO₂-absorbent 17 accompanying the CO₂-removed flue gas is recovered, and a CO₂-removed flue gas 23 is then discharged to outside the system. The rich solution 19, which is the CO₂-absorbed CO₂-absorbent, is boosted by a rich solution pump 24, and is heated in a rich/lean solution heat exchanger 25 by the lean solution, which is the CO₂-absorbent 17 that is regenerated in the absorbent regenerator 20, and is then fed to the absorbent regenerator 20.

The rich solution 19 that is charged into the absorbent regenerator 20 from the top of the absorbent regenerator 20 undergoes an endothermic reaction with the water vapor supplied from the bottom to release most of CO₂. The CO₂-absorbent having released part or most of CO₂ in the absorbent regenerator 20 is referred to as a semi-lean solution. By the time the semi-lean solution reaches the bottom of the absorbent regenerator 20, it becomes the CO₂-absorbent 17 (lean solution) in which almost all of the CO₂ has been removed. Part of this lean solution 17 is heated by steam 27 in a reboiler 26 to provide steam for CO₂ desorption inside the absorbent regenerator 20.

On the other hand, from the top of the absorbent regenerator 20, a CO₂-entrained gas 28 accompanied with water vapor released from the rich solution 19 and the semi-lean solution in the absorbent regenerator 20 is led out, the water vapor is condensed by a condenser 29, water is separated in a separation drum 30, and CO₂ gas 40 is discharged to outside the system, compressed by a separate compressor 41 so as to be recovered. A compressed and recovered CO₂ gas 42 is then injected into the oil field using Enhanced Oil Recovery (EOR) after passing through a separation drum 43 or stored in an aquifer to prevent global warming. The return water 31, which is separated and returned from the CO₂-entrained gas 28 accompanied with water vapor in the separation drum 30, is supplied to the top of the absorbent regenerator 20 and to the side of the rinse water 21 by a return water circulation pump 35. The regenerated CO₂-absorbent (lean solution) 17 is cooled by the rich solution 19 in the rich/lean solution heat exchanger 25, then boosted by a lean solution pump 32, cooled by a lean solution cooler 33, and then fed into the CO₂-absorber 18. This embodiment is only an overview of the system, and some of the auxiliary equipment are omitted from the description.

The following is a description of Test Examples suitable to demonstrate the effects of the present disclosure; but the disclosure is not limited to these Examples.

### [Test Examples]

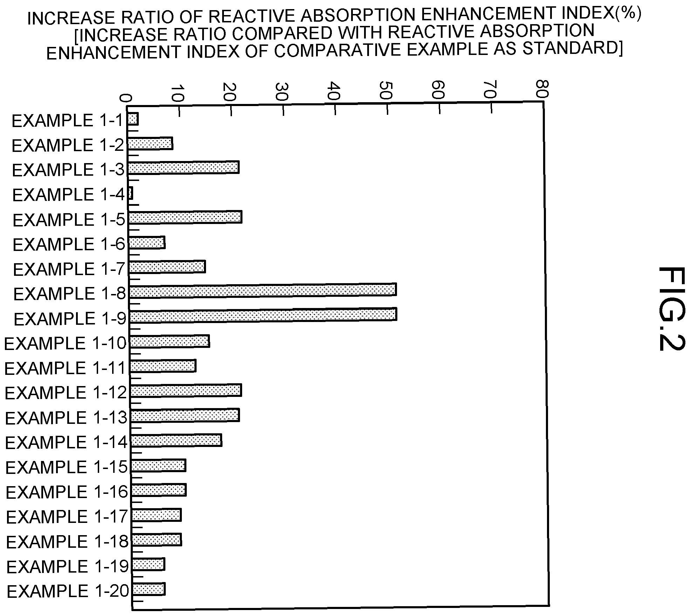

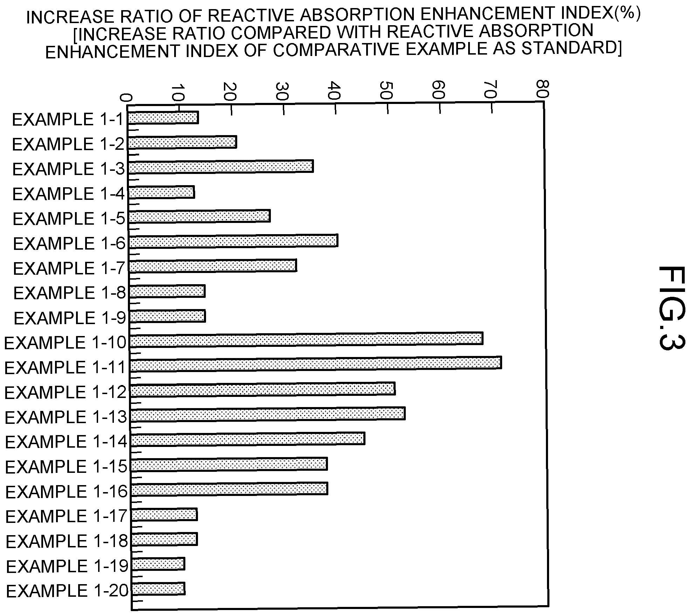

Absorption of CO₂ was performed using an absorption test apparatus not illustrated in the drawings. FIG. 2 and FIG. 3 are the graphs illustrating the measurement results of the relationship between the absorption rate of the three-component composite amine absorbent (the linear monoamine (a component), the diamine containing amino groups having the same number of substituents (b component), and the chain diamine containing amino groups having different numbers of substituents (c component) dissolved in water (d component)) in Test Examples 1-1 to 1-20 and comparative examples. The components in Test Examples are listed in [Table 1] below.

### [Table 1]

**Table 1**

| Example | (a) Chain monoamine | | (b) Diamine containing amino groups having the same number of substituents | (c) Chain diamine containing amino groups having different numbers of substituents | | |
|---|---|---|---|---|---|---|
| | | | | Component | [(b)+(c)]/(a) Weight ratio | (c)/(b) Weight ratio |
| 1-1 | Monoethanolamine | - | Propanediamine | N,N-Diethylpropanediamine | 1.0 | 10.5 |
| 1-2 | Monoethanolamine | - | Propanediamine | N,N-Diethylpropanediamine | 1.5 | 12.5 |
| 1-3 | Monoethanolamine | - | Propanediamine | N,N-Diethylpropanediamine | 3.5 | 16.5 |
| 1-4 | Monoethanolamine | - | Propanediamine | N,N-Dibutylpropanediamine | | |
| 1-5 | 2-Amino-2-methyl-1-propanol | Monoethanolamine | Propanediamine | N,N-Diethylpropanediamine | | |
| 1-6 | 2-Amino-2-methyl-1-propanol | N-Ethylaminoethanol | Piperazine | N,N-Diethylpropanediamine | | |
| 1-7 | 2-Amino-2-methyl-1-propanol | N-Butylaminoethanol | Piperazine | N,N-Diethylpropanediamine | | |
| 1-8 | 2-Amino-2-methyl-1-propanol | N-Methyldiethanolamine | Piperazine | N,N-Diethylpropanediamine | | |
| 1-9 | 2-Amino-2-methyl-1-propanol | N-Ethyldiethanolamine | Piperazine | N,N-Diethylpropanediamine | | |
| 1-10 | N-Ethylaminoethanol | - | 2-Methylpiperazine | N,N-Diethylpropanediamine | | |
| 1-11 | N-Ethylaminoethanol | - | Piperazine | N,N-Diethylpropanediamine | 0.16-3.5 | |
| 1-12 | N-Butylaminoethanol | - | 2-Methylpiperazine | N,N-Diethylpropanediamine | | |
| 1-13 | N-Butylaminoethanol | - | Piperazine | N,N-Diethylpropanediamine | | 1-16.5 |
| 1-14 | N-Butylaminoethanol | - | N,N'-dimethylpropanediamine | N,N-Diethylpropanediamine | | |
| 1-15 | N-Ethylaminoethanol | N-Methyldiethanolamine | Piperazine | N,N-Diethylpropanediamine | | |
| 1-16 | N-Ethylaminoethanol | N-Ethyldiethanolamine | Piperazine | N,N-Diethylpropanediamine | | |
| 1-17 | N-Butylaminoethanol | N-Methyldiethanolamine | Piperazine | N,N-Diethylpropanediamine | | |
| 1-18 | N-Butylaminoethanol | N-Ethyldiethanolamine | Piperazine | N,N-Diethylpropanediamine | | |
| 1-19 | N-methyldiethanolamine | 2-Amino-2-methyl-1-propanol | N,N'-dimethylpropanediamine | N,N-Diethylpropanediamine | | |
| 1-20 | N-ethyldiethanolamine | 2-Amino-2-methyl-1-propanol | N,N'-dimethylpropanediamine | N,N-Diethylpropanediamine | | |

### [Test Examples 1-1 to 1-3]

In Test Example 1-1, monoethanolamine was used as (a) the linear monoamine (a component), propanediamine was used as (b) the diamine containing amino groups having the same number of substituents (b component), and N,N-diethylpropanediamine was used as (c) the chain diamine containing amino groups having different numbers of substituents (c component); and these compounds were dissolved and mixed in water (d component) to obtain the absorbent. In Test Example 1, the weight ratio (b+c)/a was set to 1.0 and the weight ratio c/b was set to 10.5.

In Test Example 1-2, the same amine components as in Test Example 1-1 were used, but the weight ratio, as the blending ratio, (b+c)/a was set to 1.5 and the weight ratio c/b was set to 12.5. In Test Example 1-3, the same amine components as in Test Example 1-1 were used, but the weight ratio, as the blending ratio, (b+c)/a was set to 3.5 and the weight ratio c/b was set to 16.5.

Next, in Test Examples 1-4 to 1-20, the amine component was changed from Test Example 1-1, and the weight ratio, as the blending ratio, (b+c)/a was set to 0.16 or more and 3.5 or less, and the weight ratio c/b was set to 1 or more and 16.5 or less.

In Test Example 1-4, the composition of the absorbent was the same as in Test Example 1-1, except that N,N-dibutylpropanediamine was used as (c) the chain diamine containing amino groups having different numbers of substituents (c component) in Test Example 1-1.

In Test Example 1-5, the composition of the absorbent was the same as in Test Example 1-1, except that 2-amino-2-methyl-1-propanol and monoethanolamine were used as (a) the linear monoamine (a component).

In Test Example 1-6, the composition of the absorbent was the same as in Test Example 1-1, except that 2-amino-2-methyl-1-propanol and N-ethylaminoethanol were used as (a) the linear monoamine (a component) and that piperazine was used as (b) the diamine containing amino groups having the same number of substituents (b component).

In Test Example 1-7, the composition of the absorbent was the same as in Test Example 1-6, except that 2-amino-2-methyl-1-propanol and N-butylaminoethanol were used as (a) the linear monoamine (a component).

In Test Example 1-8, the composition of the absorbent was the same as in Test Example 1-6, except that 2-amino-2-methyl-1-propanol and N-methyldiethanolamine were used as (a) the linear monoamine (a component).

In Test Example 1-9, the composition of the absorbent was the same as in Test Example 1-6, except that 2-amino-2-methyl-1-propanol and N-ethyldiethanolamine were used as (a) the linear monoamine (a component).

In Test Example 1-10, the composition of the absorbent was the same as in Test Example 1-1, except that N-ethylaminoethanol was used as (a) the linear monoamine (a component) and that 2-methylpiperazine was used as (b) the diamine containing amino groups having the same number of substituents (b component).

In Test Example 1-11, the composition of the absorbent was the same as in Test Example 1-10, except that piperazine was used as (b) the diamine containing amino groups having the same number of substituents (b component).

In Test Example 1-12, the composition of the absorbent was the same as in Test Example 1-1, except that N-butylaminoethanol was used as (a) the linear monoamine (a component) and that 2-methylpiperazine was used as (b) the diamine containing amino groups having the same number of substituents (b component).

In Test Example 1-13, the composition of the absorbent was the same as in Test Example 1-12, except that piperazine was used as (b) the diamine containing amino groups having the same number of substituents (b component).

In Test Example 1-14, the composition of the absorbent was the same as in Test Example 1-12, except that N,N'-dimethylpropanediamine was used as (b) the diamine containing amino groups having the same number of substituents (b component).

In Test Example 1-15, the composition of the absorbent was the same as in Test Example 1-1, except that N-ethylaminoethanol and N-methyldiethanolamine were used as (a) the linear monoamine (a component) and that piperazine was used as (b) the diamine containing amino groups having the same number of substituents (b component).

In Test Example 1-16, the composition of the absorbent was the same as in Test Example 1-15, except that N-ethylaminoethanol and N-ethyldiethanolamine were used as (a) the linear monoamine (a component).

In Test Example 1-17, the composition of the absorbent was the same as in Test Example 1-15, except that N-butylaminoethanol and N-methyldiethanolamine were used as (a) the linear monoamine (a component).

In Test Example 1-18, the composition of the absorbent was the same as in Test Example 1-15, except that N-butylaminoethanol and N-ethyldiethanolamine were used as (a) the linear monoamine (a component).

In Test Example 1-19, the composition of the absorbent was the same as in Test Example 1-1, except that N-methyldiethanolamine and 2-amino-2-methyl-1-propanol were used as (a) the linear monoamine (a component) and that N,N'-dimethylpropanediamine was used as (b) the diamine containing amino groups having the same number of substituents (b component).

In Test Example 1-20, the composition of the absorbent was the same as in Test Example 1-1, except that N-ethyldiethanolamine and 2-amino-2-methyl-1-propanol were used as (a) the linear monoamine (a component) and that N,N'-dimethylpropanediamine was used as (b) the diamine containing amino groups having the same number of substituents (b component).

The rate at which the absorbent absorbed CO₂ was measured for each of the above Test Examples. Test conditions with a temperature of 40°C and a CO₂ partial pressure of 10 kPa were used. As comparative examples, for each Test Example, the absorbent was prepared in which the weight portion of the component of (c) the chain diamine containing amino groups having different numbers of substituents was made (a) the linear monoamine; and with this, the absorption rate was calculated similarly. FIG. 2 is the figure illustrating the calculation result of the increase ratio of the reaction rate of each Test Example in which the reaction rate of the corresponding comparative example is taken as 1.

As other comparative examples, FIG. 3 is the figure illustrating the calculation result of the increase ratio of the reaction rate of each Test Example based on, as the standard, the absorbent containing 30% by weight (30w%) of monoethanolamine as the amine component.

Next, on the basis that a total concentration of amines was made 55w%, the absorption rate of the absorbent containing N,N-diethylpropanediamine used as the component of (c) the chain diamine containing amino groups having different numbers of substituents was compared with the absorption rate of the absorbent using, in place of (c) the chain diamine containing amino groups having different numbers of substituents, N,N,N',N'-tetramethylpropanediamine as a comparative example. As a result, the reaction rate of the absorbent using the component of (c) the chain diamine containing amino groups having different numbers of substituents increased by 940. In other words, the reaction rate became 1.94 times faster.

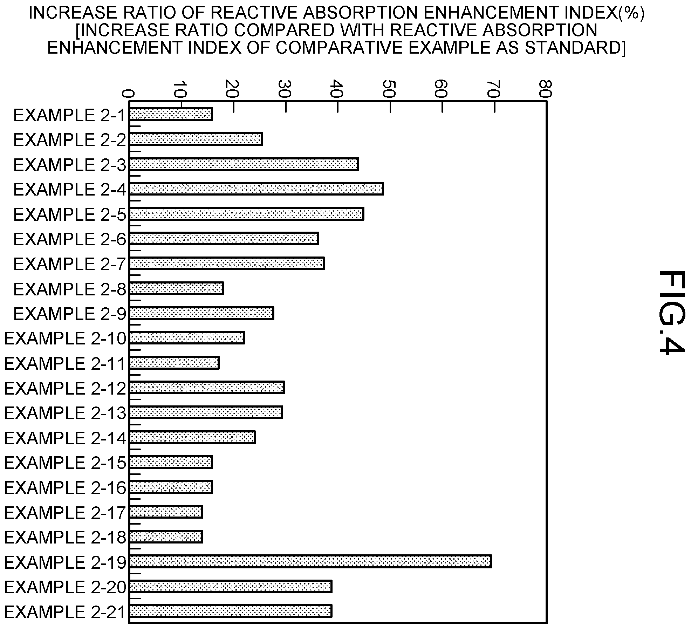

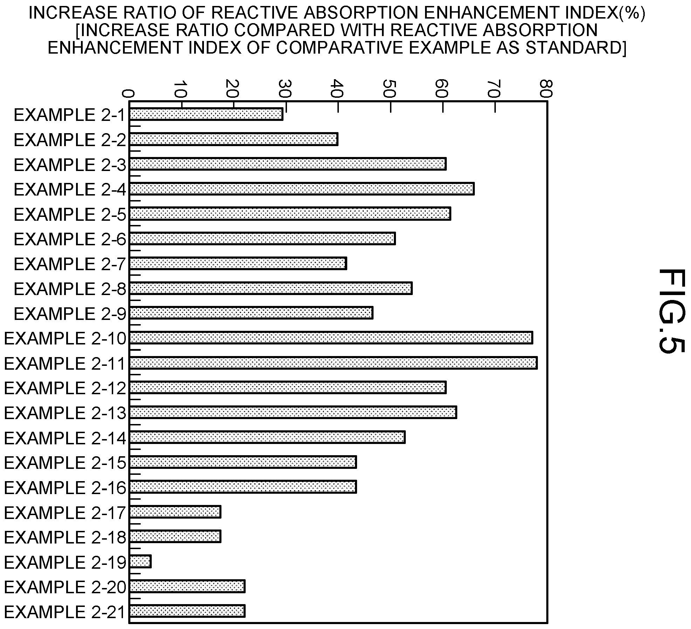

Next, Test Examples in which (c) the chain diamine containing amino groups having different numbers of substituents is changed will be described. FIG. 4 and FIG. 5 are the figures illustrating the measurement results of the relationship between the absorption rate of the three-component composite amine absorbent (the linear monoamine (a component), the diamine containing amino groups having the same number of substituents (b component), and the chain diamine containing amino groups having different numbers of substituents (c component) were dissolved in water (d component)) in Test Examples 2-1 to 2-21 and comparative examples. The components in Test Examples are listed in [Table 2] below.

**Table 2**

| Example | (a) Chain monoamine | | (b) Diamine containing amino groups having the same number of substituents | (c) Chain diamine containing amino groups having different numbers of substituents | | |
|---|---|---|---|---|---|---|
| | | | | Component | [(b)+(c)]/(a) Weight ratio | (c)/(b) Weight ratio |
| 2-1 | Monoethanolamine | - | Propanediamine | N,N,N'-Trimethylpropanediamine | 1.0 | 10.5 |
| 2-2 | Monoethanolamine | - | Propanediamine | N,N,N'-Trimethylpropanediamine | 1.5 | 12.5 |
| 2-3 | Monoethanolamine | - | Propanediamine | N,N,N'-Trimethylpropanediamine | 3.5 | 16.5 |
| 2-4 | Monoethanolamine | - | Propanediamine | N,N,N'-Triethylpropanediamine | | |
| 2-5 | Monoethanolamine | - | Propanediamine | N'-Ethyl-N,N-dimethylpropanediamine | | |
| 2-6 | Monoethanolamine | - | Propanediamine | N,N-Diethyl-N'-methylpropanediamine | | |
| 2-7 | 2-Amino-2-methyl-1-propanol | Monoethanolamine | Piperazine | N,N,N'-Trimethylpropanediamine | | |
| 2-8 | 2-Amino-2-methyl-1-propanol | N-Ethylaminoethanol | Piperazine | N,N,N'-Trimethylpropanediamine | | |
| 2-9 | 2-Amino-2-methyl-1-propanol | N-Butylaminoethanol | Piperazine | N,N,N'-Trimethylpropanediamine | | |
| 2-10 | N-Ethylaminoethanol | - | 2-Methylpiperazine | N,N,N'-Trimethylpropanediamine | | |
| 2-11 | N-Ethylaminoethanol | - | Piperazine | N,N,N'-Trimethylpropanediamine | 0.16-3.5 | 1-16.5 |
| 2-12 | N-Butylaminoethanol | - | 2-Methylpiperazine | N,N,N'-Trimethylpropanediamine | | |
| 2-13 | N-Butylaminoethanol | - | Piperazine | N,N,N'-Trimethylpropanediamine | | |
| 2-14 | N-Butylaminoethanol | - | N,N'-Dimethylpropanediamine | N,N,N'-Trimethylpropanediamine | | |
| 2-15 | N-Ethylaminoethanol | N-Methyldiethanolamine | Piperazine | N,N,N'-Trimethylpropanediamine | | |
| 2-16 | N-Ethylaminoethanol | N-Ethyldiethanolamine | Piperazine | N,N,N'-Trimethylpropanediamine | | |
| 2-17 | N-Butylaminoethanol | N-Methyldiethanolamine | Piperazine | N,N,N'-Trimethylpropanediamine | | |
| 2-18 | N-Butylaminoethanol | N-Ethyldiethanolamine | Piperazine | N,N,N'-Trimethylpropanediamine | | |
| 2-19 | 3-Dimethylamino-1-propanol | - | Piperazine | N,N,N'-Trimethylpropanediamine | | |
| 2-20 | N-methyldiethanolamine | 2-Amino-2-methyl-1-propanol | N,N'-dimethylpropanediamine | N,N,N'-Trimethylpropanediamine | | |
| 2-21 | N-ethyldiethanolamine | 2-Amino-2-methyl-1-propanol | N,N'-dimethylpropanediamine | N,N,N'-Trimethylpropanediamine | | |

### [Test Examples 2-1 to 2-3].

In Test Example 2-1, monoethanolamine was used as (a) the linear monoamine (a component), propanediamine was used as (b) the diamine containing amino groups having the same number of substituents (b component), and N,N,N'-trimethylpropanediamine was used as (c) the chain diamine containing amino groups having different numbers of substituents (c component), and these compounds were dissolved and mixed in water (d component) to obtain the absorbent. In Test Example 2, the weight ratio (b+c)/a was set to 1.0 and the weight ratio c/b was set to 10.5.

In Test Example 2-2, the same amine components as in Test Example 2-1 were used, and the weight ratio (b+c)/a was set to 1.5 and the weight ratio c/b was set to 12.5. In Test Example 2-3, the same amine components as in Test Example 2-1 were used, and the weight ratio (b+c)/a was set to 3.5 and the weight ratio c/b was set to 16.5.

Next, in Test Examples 2-4 to 2-21, the amine component was changed from Test Example 2-1, and the weight ratio (b+c)/a was set to 0.16 or more and 3.5 or less, and the weight ratio c/b was set to 1 or more and 16.5 or less.

In Test Example 2-4, the composition of the absorbent was the same as in Test Example 1-1, except that N,N,N'-triethylpropanediamine was used as (c) the chain diamine containing amino groups having different numbers of substituents (c component), similarly to Test Example 2-1.

In Test Example 2-5, the composition of the absorbent was the same as in Test Example 2-1, except that N'-ethyl-N,N-dimethylpropanediamine was used as (c) the chain diamine containing amino groups having different numbers of substituents (c component).

In Test Example 2-6, the composition of the absorbent was the same as in Test Example 2-1, except that N,N-diethyl-N'-methylpropanediamine was used as (c) the chain diamine containing amino groups having different numbers of substituents (c component).

In Test Example 2-7, the composition of the absorbent was the same as in Test Example 2-1, except that 2-amino-2-methyl-1-propanol and monoethanolamine were used as (a) the linear monoamine (a component), and that piperazine was used as (b) the diamine containing amino groups having the same number of substituents (b component).

In Test Example 2-8, the composition of the absorbent was the same as in Test Example 2-7, except that 2-amino-2-methyl-1-propanol and N-ethylaminoethanol were used as (a) the linear monoamine (a component).

In Test Example 2-9, the composition of the absorbent was the same as in Test Example 2-7, except that 2-amino-2-methyl-1-propanol and N-butylaminoethanol were used as (a) the linear monoamine (a component).

In Test Example 2-10, the composition of the absorbent was the same as in Test Example 2-1, except that N-ethylaminoethanol was used as (a) the linear monoamine (a component), and that 2-methylpiperazine was used as (b) the diamine containing amino groups having the same number of substituents (b component).

In Test Example 2-11, the composition of the absorbent was the same as in Test Example 2-10, except that piperazine was used as (b) the diamine containing amino groups having the same number of substituents (b component).

In Test Example 2-12, the composition of the absorbent was the same as in Test Example 2-1, except that N-butylaminoethanol was used as (a) the linear monoamine (a component), and that 2-methylpiperazine was used as (b) the diamine containing amino groups having the same number of substituents (b component).

In Test Example 2-13, the composition of the absorbent was the same as in Test Example 2-12, except that piperazine was used as (b) the diamine containing amino groups of the same class (b component).

In Test Example 2-14, the composition of the absorbent was the same as in Test Example 2-12, except that N,N'-dimethylpropanediamine was used as (b) the diamine containing amino groups having the same number of substituents (b component).

In Test Example 2-15, the composition of the absorbent was the same as in Test Example 2-1, except that N-ethylaminoethanol and N-methyldiethanolamine were used as (a) the linear monoamine (a component), and that piperazine was used as (b) the diamine containing amino groups having the same number of substituents (b component).

In Test Example 2-16, the composition of the absorbent was the same as in Test Example 2-15, except that N-ethylaminoethanol and N-ethyldiethanolamine were used as (a) the linear monoamine (a component).

In Test Example 2-17, the composition of the absorbent was the same as in Test Example 2-15, except that N-butylaminoethanol and N-methyldiethanolamine were used as (a) the linear monoamine (a component).

In Test Example 2-18, the composition of the absorbent was the same as in Test Example 2-15, except that N-butylaminoethanol and N-ethyldiethanolamine were used as (a) the linear monoamine (a component).

In Test Example 2-19, the composition of the absorbent was the same as in Test Example 2-15, except that 3-dimethylamino-1-propanol was used as (a) the linear monoamine (a component).

In Test Example 2-20, the composition of the absorbent was the same as in Test Example 2-1, except that N-methyldiethanolamine and 2-amino-2-methyl-1-propanol were used as (a) the linear monoamine (a component), and that N,N'-dimethylpropanediamine was used as (b) the diamine containing amino groups having the same number of substituents (b component).

In Test Example 2-21, the composition of the absorbent was the same as in Test Example 2-1, except that N-ethyldiethanolamine and 2-amino-2-methyl-1-propanol were used as (a) the linear monoamine (a component), and that N,N'-dimethylpropanediamine was used as (b) the diamine containing amino groups having the same number of substituents (b component).

As comparative examples, for each Test Example, the absorbent was prepared in which the weight portion of the component of (c) the chain diamine containing amino groups having different numbers of substituents was made (a) the linear monoamine; and with this, the absorption rate was calculated similarly. FIG. 4 is the figure illustrating the calculation result of the increase ratio of the reaction rate of each Test Example in which the reaction rate of the corresponding comparative example is taken as 1.

As other comparative examples, FIG. 5 is the figure illustrating the calculation result of the increase ratio of the reaction rate of each Test Example based on, as the standard, the absorbent containing 30% by weight (30w%) of monoethanolamine as the amine component.

Next, on the basis that a total concentration of amines was made 55w%, the absorption rate of the absorbent containing N,N,N'-trimethylpropanediamine used as the component of (c) the chain diamine containing amino groups having different numbers of substituents was compared with the absorption rate of the absorbent using, in place of (c) the chain diamine containing amino groups having different numbers of substituents, N,N,N',N'-tetramethylpropanediamine as a comparative example. As a result, the reaction rate of the absorbent using the component of (c) the chain diamine containing amino groups having different numbers of substituents increased by 124%. In other words, the reaction rate became 2.24 times faster.

As can be seen in the above Test Examples, by using the composite amine absorbent containing (a) the chain monoamine, (b) the diamine containing amino groups having the same number of substituents, (c) the chain diamine containing amino groups having different numbers of substituents, and (d) water, the reaction rate as the absorbent can be increased and the performance as the absorbent can be improved. In particular, the absorbent including (c) the chain diamine containing amino groups having different numbers of substituents can be improved in its performance as compared with the absorbent containing the chain diamine containing amino groups having the same number of substituents or with the absorbent consisting only of (a) the chain monoamine and (b) the diamine containing amino groups having the same number of substituents.

When (c) the chain diamine containing amino groups having different numbers of substituents includes at least one chain diamine containing a tertiary amino group and a primary amino group or at least one chain diamine containing a tertiary amino group and a secondary amino group, the absorption rate thereof can be increased further. In particular, when (c) the chain diamine containing amino groups having different numbers of substituents includes at least one chain diamine containing a tertiary amino group and a secondary amino group, the absorption rate thereof can be increased furthermore.

### Reference Signs List

- 12: CO₂ recovery unit
- 13: Industrial combustion facility
- 14: Flue gas
- 16: Flue gas cooling device
- 17: CO₂-absorbent (lean solution)
- 18: CO₂-absorber
- 19: CO₂-absorbed CO₂-absorbent (rich solution)
- 20: Absorbent regenerator
- 21: Rinse water

## Claims

1. A composite amine absorbent that absorbs at least one of CO₂ and H₂S in a gas, the composite amine absorbent comprising:
(a) a chain monoamine;
(b) a diamine containing amino groups having the same number of substituents;
(c) a chain diamine containing amino groups having different numbers of substituents; and
(d) water.

2. The composite amine absorbent according to claim 1, wherein (a) the chain monoamine includes at least one of a primary chain monoalkanolamine, a secondary chain monoalkanolamine, and a tertiary chain monoalkanolamine.

3. The composite amine absorbent according to claim 1 or 2, wherein (b) the diamine containing amino groups having the same number of substituents includes at least one of a primary chain polyamine, a secondary chain polyamine, and a secondary cyclic polyamine.

4. The composite amine absorbent according to any one of claims 1 to 3, wherein (c) the chain diamine containing amino groups having different numbers of substituents includes at least one chain diamine containing a tertiary amino group.

5. The composite amine absorbent according to any one of claims 1 to 3, wherein (c) the chain diamine containing amino groups having different numbers of substituents includes at least one chain diamine containing a tertiary amino group and a primary amino group.

6. The composite amine-based absorbent according to any one of claims 1 to 3, wherein (c) the chain diamine containing amino groups having different numbers of substituents includes at least one chain diamine containing a tertiary amino group and a secondary amino group.

7. The composite amine absorbent according to any one of claims 1 to 6, wherein a total concentration of (a) the chain monoamine and (b) the diamine containing amino groups having the same number of substituents is 20% by weight or more and 65% by weight or less of the total absorbent.

8. The composite amine absorbent according to any one of claims 1 to 7, wherein a weight ratio of ((b) the diamine containing amino groups having the same number of substituents + (c) the chain diamine containing amino groups having different numbers of substituents) / ((a) the chain monoamine) is 0.16 or more and 3.5 or less.

9. The composite amine absorbent according to any one of claims 1 to 8, wherein a weight ratio of (b) the diamine containing amino groups having the same number of substituents / (c) the chain diamine containing amino groups having different numbers of substituents is 1 or more and 16.5 or less.

10. A removal unit comprising:
an absorber for removing at least one of CO₂ and H₂S by bringing a gas containing at least one of CO₂ and H₂S into contact with an absorbent; and
an absorbent regenerator for regenerating a liquid having at least one of CO₂ and H₂S absorbed, a liquid regenerated by removing at least one of CO₂ and H₂S in the absorbent regenerator being reused in the absorber, wherein
the composite amine absorbent according to any one of claims 1 to 9 is used.

11. The removal unit according to claim 10, wherein
an absorption temperature in the absorber is 30 to 80°C, and
a regeneration temperature in the absorbent regenerator is 110°C or higher.

12. A removal method comprising:
removing at least one of CO₂ and H₂S by bringing a gas containing at least one of CO₂ and H₂S into contact with an absorbent in an absorber;
regenerating a liquid having at least one of CO₂ and H₂S absorbed in an absorbent regenerator; and
reusing in the absorber a liquid regenerated by removing at least one of CO₂ and H₂S in the absorbent regenerator, wherein
the composite amine absorbent according to any one of claims 1 to 9 is used.

13. The removal method according to claim 12, wherein
an absorption temperature in the absorber is 30 to 80°C, and
a regeneration temperature in the absorbent regenerator is 110°C or higher.
